# EUROPEAN PATENT APPLICATION

(11) **EP 1 681 827 A1**
(43) Date of publication of application: **19.07.2006**
(21) Application number: 06112330.3
(22) Date of filing: 15.10.1999
(51) Int. Cl.: H04L 29/06, G06F 9/46

(54) **Enterprise level integration and communication techniques**

(30) Priority: 16.10.1998 US 104654 P; 22.01.1999 US 116754 P
(62) Divisional of application: 99952009.1
(71) Applicant: Auspice, Inc., Framingham, MA 01701 (US)
(72) Inventor: BERTHOLD, Richard T., Ashland, MA 01721 (US); DIBIASO, Dino, Natick, MA 01760 (US); LEE, Kevin, Sung-Ho, Waltham, MA 02451 (US)
(74) Representative: Walaski, Jan Filip

(57) **Abstract**

In an enterprise system, an operator interacts with an enterprise level system integration and process execution computer program (EADIPECP) to input various scripts to implement enterprise level processes typically using multiple target systems to collect data and perform the steps of the processes. The operator writes scripts in a user interface script language. The EADIPECP compiles and executes the scripts. When executing the scripts, the EADIPECP sends command data packets to the target systems through a network.

## Description

### Cross Reference To Related Applications

This application claims priority under 35 USC § 119(e) from U.S. Provisional Application Serial No. 60/116,754, filed January 22,1999, and from U.S. Provisional Application Serial No. 60/104,654, filed October 16, 1998.

### BACKGROUND

This invention relates to techniques for communicating among multiple computer program modules having different data communication protocols, and particularly communicating between an enterprise level integration and process execution computer program and multiple systems under control of that program.

One of the challenges currently present in the computer industry is the challenge of integrating disparate systems including integrating older, legacy systems with newer systems. This challenge is particularly present when automating management of operations at an enterprise which uses various systems, some older and some newer, often from different manufacturers and designed to communicate using different protocols, to perform those operations.

One technique for integrating older legacy systems is to build wrappers which, in effect, provide a new Application Program Interface (API) for the legacy systems. But such wrappers can be expensive to build.

### Summary

In one general aspect, the invention features an enterprise control engine processing data and instructions associated with a target system and generating a command data packet, the command data packet including at least a command for the target system and a network address for an interface layer for communicating the command to the target system; and causing the command data packet to be transferred across a network to the interface layer based on the network address in the command data packet, where the interface layer communicates the command to the target system.

Embodiments of this aspect of the invention can include one or more of the following features.

The control engine runs on a server computer and the interface layer runs on a client computer remote from the server computer, the server computer and the client computer being connected to the network. The target system runs on the remote client computer. The interface layer is capable of communicating with the target system in accordance to a protocol. The enterprise control engine sends data to the interface layer in accordance with a second protocol, the second protocol being different from the first protocol.

The enterprise control engine processes data and instructions associated with a second target system and generates a second command data packet, the second command data packet including at least a second command for the second target system and the network address for an interface layer for communicating the command to the second target system. The interface layer is capable of communicating with the second target system in accordance to a second protocol. The second protocol is different from the first-mentioned protocol. The enterprise control engine sends data to the interface layer in accordance with a third protocol, the third protocol being different from the first and second protocols.

The interface layer includes a target system handler for communicating with the first-mentioned target system in accordance with the first mentioned protocol, the first-mentioned data packet including an target system handler identifier for identifying the target system handler. The target system handler is associated with the first-mentioned protocol and the target system handler identifier identifies the first-mentioned protocol. The target system handler is capable of communicating with at least one other target system in accordance with a third protocol. The interface layer includes a second target system handler for communicating with the second target system in accordance with the second protocol, the second data packet including a second target system handler identifier for identifying the second target system handler. The target system handler is a Java based computer program module.

An input corresponding to the command is received from a user where the input is a second command different from the first-mentioned. A database storing a relationship between the second command operator and the first command operator is then accessed. The second command is part of a script program, where the database is accessed when compiling the script program. The target system can send data to the interface layer, the interface layer processes the data and sending the processed data to the enterprise control engine.

In another general aspect, the invention features an interface layer receiving, from a network, a command data packet generated by an enterprise control engine that processes data and instructions associated with a target system and generates the command data packet, the command data packet including at least a command for the target system and a network address for the interface layer for communicating the command to the target system; and the interface layer communicating the command to the system.

In yet another aspect, the invention features an input port receiving, from a network, a command data packet generated by an enterprise control engine that processes data and instructions associated with a target system and generates the command data packet, the command data packet including at least a command for the target system and a network address for the interface layer for communicating the command to the target system; and an output port communicating the command to the system.

In another general aspect, the invention features processing data and instructions associated with a target system and generating a command data packet, the command data packet including at least a command for the target system and a network address for an interface layer for communicating the command to the target system; causing the command data packet to be transferred across a network to the interface layer based on the network address in the command data packet, where the interface layer communicates the command to the target system.

In yet another aspect, the invention features processing, at an enterprise control engine, a plurality of instructions which include instructions for sending a message to an operator; sending a message command from the enterprise control engine to a speech interface module, the command including at least a command operator and an application program interface (API) flag identifying an API to be used for communicating with a text-to-speech converter; and sending, at the speech interface module, the command operator to the text-to-speech converter using the API identified by the API flag.

Embodiments of this aspect of the invention can include one or more of the following instructions.

A speech recognizer sends the data to the speech interface. The speech interface processes the data and sends the processed data to the enterprise control engine.

In yet another aspect, the invention features executing a first script program; executing a second script program substantially in parallel with the first script program; and providing data to the first script program in response to a command from the first script program, the data indicating the execution status of the second script program.

In another aspect, the invention features executing a computer program in real time, the computer program comprising a sequence of instructions and providing data to a user in real time and substantially in parallel with the realtime execution of the first program, the data indicating a status of execution of the computer program and an indication of which one of the instruction being currently executed. The computer program can be a script based computer program.

In yet another aspect, the invention features an interface layer receiving data from a target system in accordance with a first protocol and sending the data in accordance with a second protocol to an enterprise control engine, the second protocol being different from the first protocol, and the enterprise control engine processing the data.

Other features and advantages of the invention will be apparent from the following detailed description, and from the claims.

Unless otherwise defined, all technical and scientific terms used herein have the same meaning as commonly understood by one of ordinary skill in the art to which this invention belongs. Suitable methods, and materials, and components to be used in the practice or testing of the present invention are described below, although methods and materials similar or equivalent to those described herein can also be used. In addition, the materials, methods, and examples are illustrative only and not intended to be limiting.

### BRIEF DESCRIPTION OF DRAWINGS

FIGs.1 and 1A-E are overall schematic diagrams of an enterprise level integration and process execution system including one enterprise level integration and process execution computer program and multiple target systems controlled by the program.
FIG. 1F is a schematic diagram of levels of abstraction of computer program with which enterprise level integration and process execution computer program communicates.
FIG. 2 is a schematic diagram of the enterprise level integration and process execution system of FIG. 1.
FIGs. 3A-B are illustrations of command and data object tables stored in a database of the enterprise level integration and process execution system of FIG. 1.
FIG. 4 is a schematic diagram of an architecture of a script program executed by the enterprise level integration and process execution engine.
FIG. 4A is a representation of a graphical user interface for inputting a script program.
FIG. 4B is an example of a script program.
FIG. 5 is a schematic diagram of the interrelationship between the enterprise level integration and process execution engine and a target interface layer.
FIG. 6 is a schematic diagram of the interrelationship between the enterprise level integration and process execution engine and human interaction packages.
FIGs. 7A and 7B are schematic diagrams of architectures for connecting the enterprise level integration and process execution application program to two or more target interface layers.

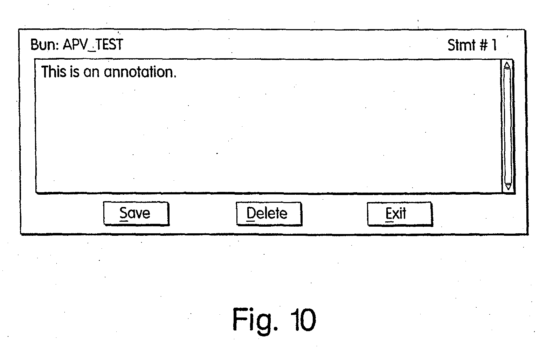

FIGs. 8-11 are representations of graphical user interfaces for controlling the operation of enterprise level integration and process execution system and enterprise level integration and process execution computer program.

### DETAILED DESCRIPTION

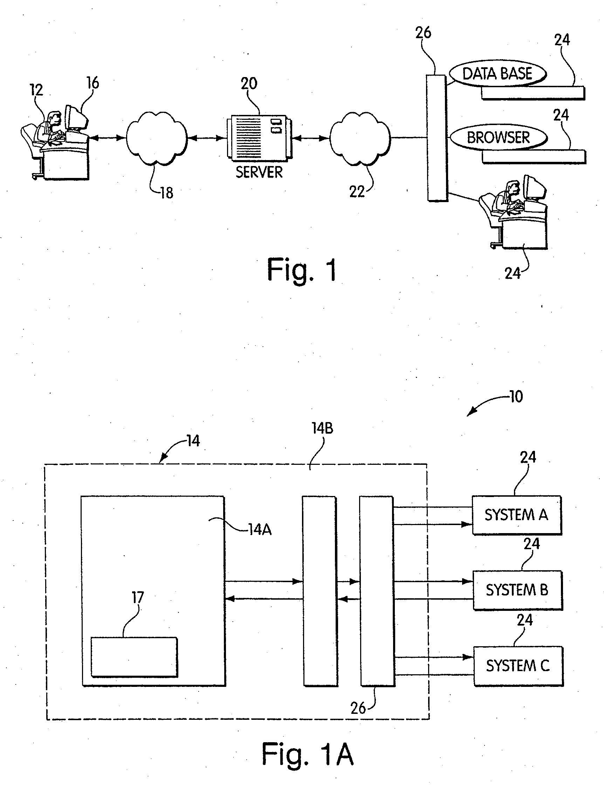

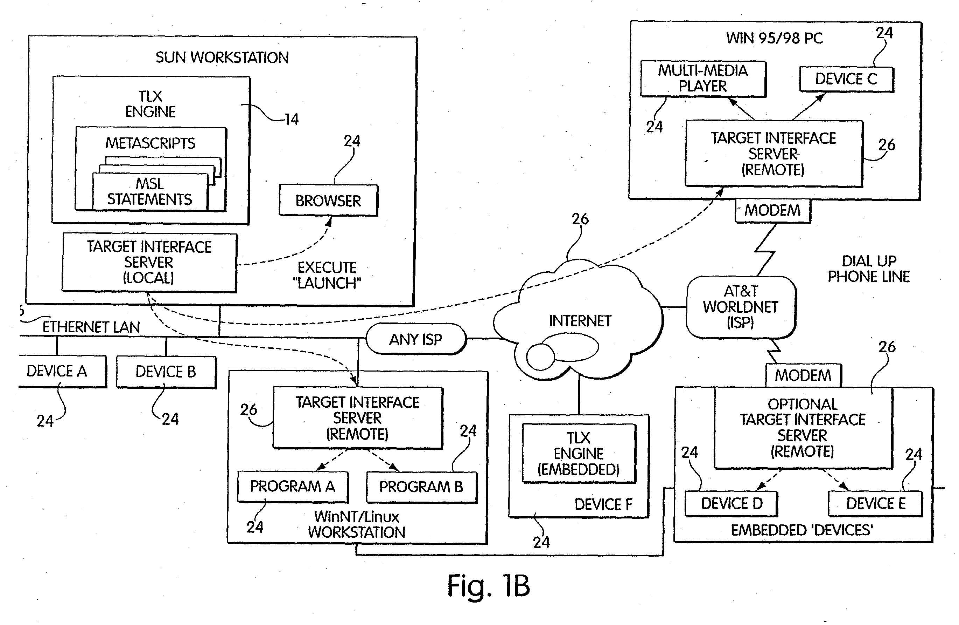

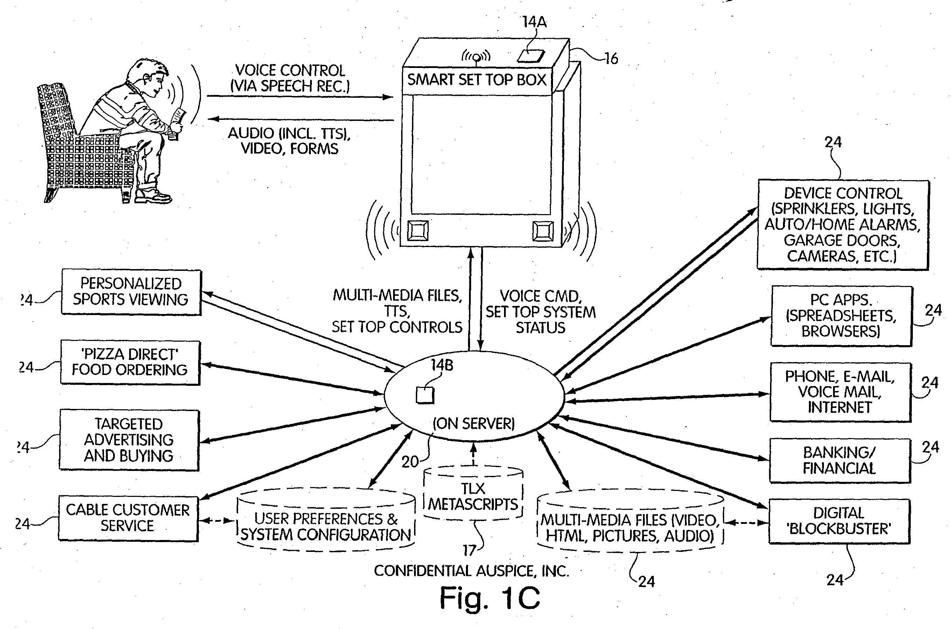

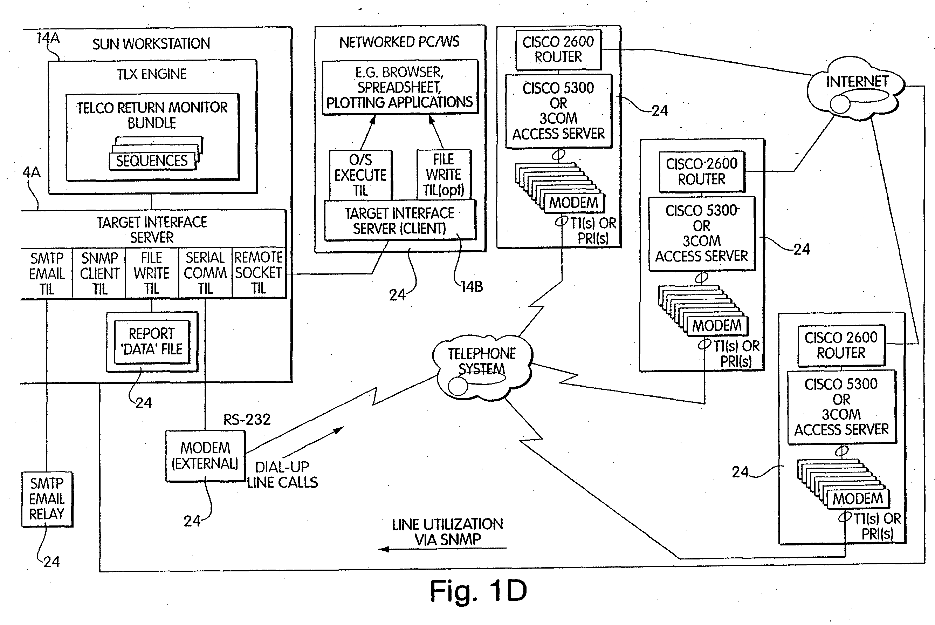

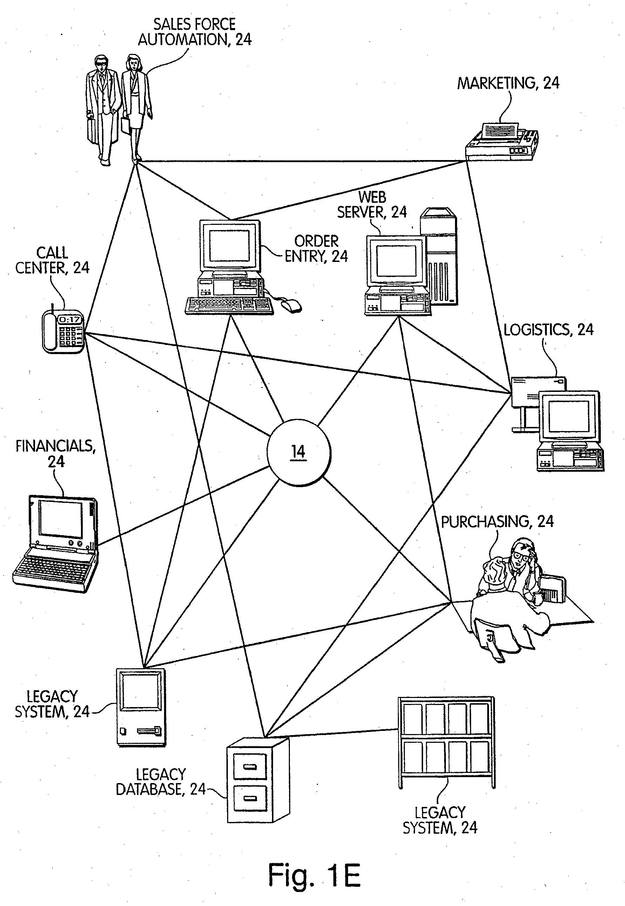

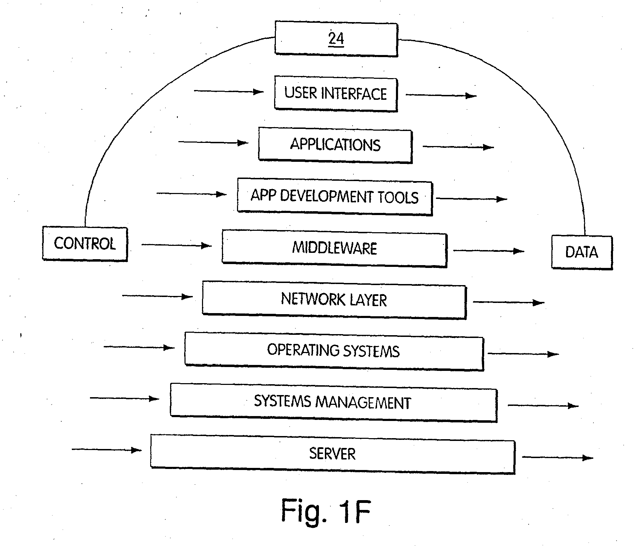

Referring to FIGs. 1 and 1A, in an enterprise system 10, an operator 12 interacts with an enterprise level system integration and process execution computer program (EADIPECP) 14 to input various scripts 17 to implement enterprise level processes using multiple target systems 24 to collect data and perform the steps of the processes. EADIPECP 14 includes a client portion 14A running on a computer 16 and a server portion 14B running on an enterprise level integration and process server 20. Computer 16 is connected via a network 18 to server 20. Operator 12 writes scripts 17 in a user interface script language (hereinafter, "UI script language"). Server portion 14B compiles and executes scripts 17. When executing the scripts 17, server portion 14B of EADIPECP 14 sends commands to target systems 24 through a network 22. Each one of target systems 24 may require an appropriate data communication protocol to be used when communicating with that target system. The required data communication protocol of at least one of the target systems may be different from the required data communication protocol of at least one of the other target systems. Hence, commands from server portion 14B of EADIPECP 14 intended for each target system 24 need to be transmitted according to a protocol appropriate to (and recognized by) the particular target system.

However, portion 14B does not communicate the commands directly with target systems 24. Instead, portion 14B packages the commands in a singular network packet for transmission over network 22 - for example, a packet for transmission through a Universal Datagram Protocol/Internet Protocol (UDP/IP) socket-to a target interface layer 26. Upon receiving a command data packet, based on the information in the packet, target interface layer 26 determines how the communication to the specific target system 24 should be handled and proceeds to communicate the command in the packet in accordance with the requirements of the specific target system 24. Hence, portion 14B need only communicate according to a standard protocol over network 22, while target interface layer 26 communicates in accordance with the various protocols with target systems 24.

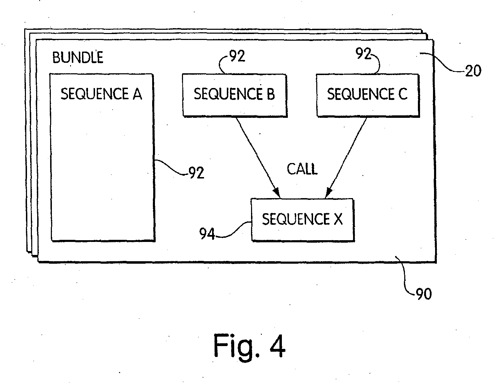

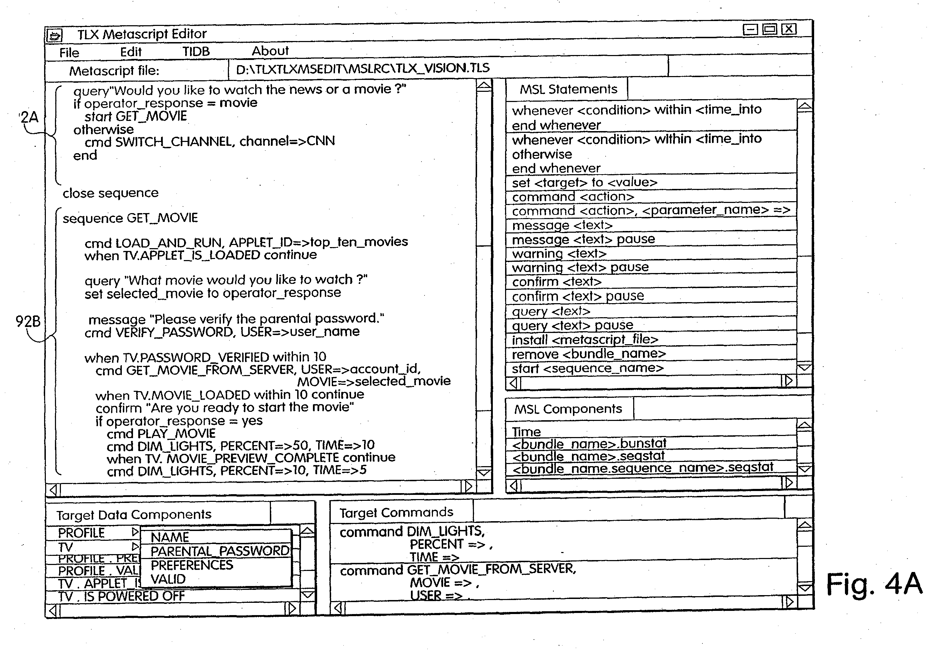

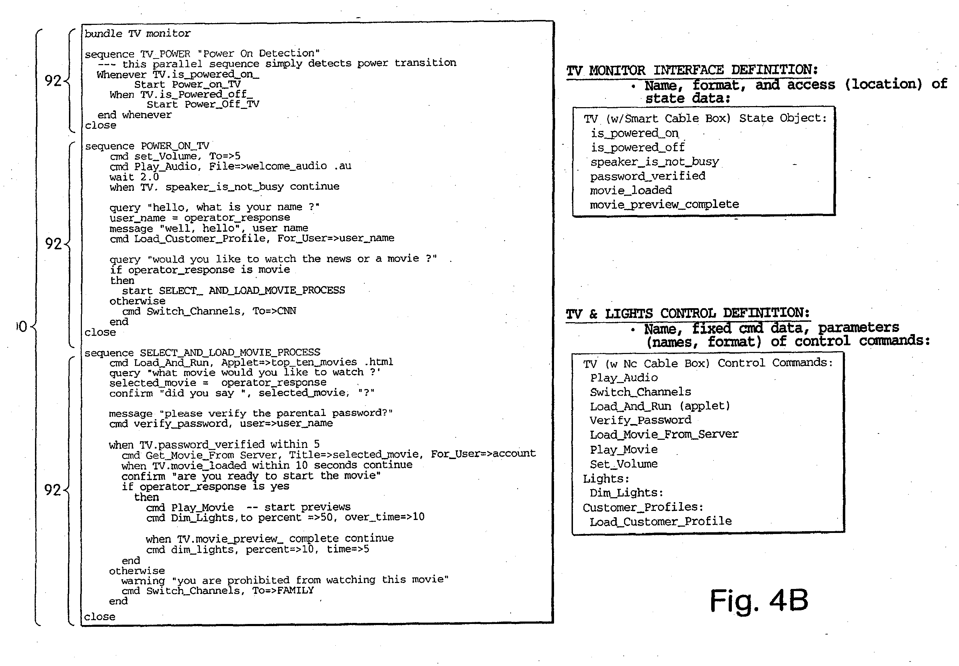

Depending on the nature of target systems 24 and scripts 17, enterprise system 10 can perform a variety of functions. Examples of some embodiments of enterprise system 10 will now be described. Referring to FIG. 1B, enterprise system 10 can be distributed across a variety of networks, such as Local Area Networks, Wide Area Networks, intranet, Internet, or any other network type, and integrate and control operation of systems across the networks. Referring to Fig. 1C, enterprise system 10 can be an intelligent audio/visual system - in other words, an intelligent television - allowing a user to interact with a television set to perform a variety of tasks including shopping, banking, video conferencing, controlling household devices, and watching various programs on demand. EADIPECP 14 allows integrating the various target systems 24 into a singular enterprise level system 10 and performing processes according to scripts 17 to implement various functionalities. Examples of such scripts are shown in FIGs. 4A and 4B.

Referring to FIG. 1D, another example of an embodiment of enterprise system 10 is a telecommunication network monitoring system. EADIPECP 14 allows integrating various systems. 24 including telecommunication routers, remote work stations, email servers, and external modems to monitor performance of a telecommunication network of a telecommunication client. As can be seen, there are multiple types of systems monitored by EADIPECP 14 each type typically requiring a unique communication protocol.

Referring to FIG. 1E, yet another example of an embodiment of enterprise system 10 is an electronic commerce system serving customers over the World Wide Web. EADIPECP 14, in this system, allows incorporating various target systems 24, such as including legacy systems, call center systems, financial systems (e.g., credit reporting systems, credit card transaction approval systems, leasing systems, banking systems), legacy databases, inventory control and logistic systems, and the purchasers' web browsers to implement a complete electronic commerce system using script language.

As is apparent from the above examples of enterprise systems 10, systems 24 can be a variety of systems including, but not limited to:
- computer systems (e.g., a credit reporting agency's computer system, a computer manufacturer's computer system for receiving purchase orders for user configured computers, a bank's computer system, etc.),
- application programs (e.g., a web browser, a speech-to-text generator, a database, a videolibrary, etc.), electronically controlled physical devices (e.g., microprocessor controlled pumps, routers, electrical relays, locomotives, etc.),
- human beings interacting with a computer (an on-site technician interacting with a handheld device, a customer service representative, a plant manager, etc.), or
- any computer program operating in any one of the eight level of abstractions shown in Fig. 1F, namely, server layer, systems management layer, operating systems layer, network layer, middleware layer, application development tools layer, application layer, and user interface layer.

Of course, this list is not exhaustive and only illustrative of examples of systems 24.

As is apparent from the above examples of system 10, EADIPECP 14 can have a variety of architectures. For example, EADIPECP 14 can have a distributed architecture with server portion 14B and client portion 14A, distributed among server 20 and client computer 12, or the entire EADIPECP 14 can run on one computer or among more than two computers in a distributed manner. The functionality of the various distributed portions of EADIPECP 14 can change in different embodiments. For example, in one embodiment, client portion 14A of EADIPECP 14 may have significant functionality such as processing user input scripts 17 and compiling them before sending scripts 17 to server portion 14B of EADIPECP 14. In another embodiment, client portion 14A of EADIPECP 14 may act merely as an input terminal having limited functionality intended only to acquire scripts 17 from operator 12 and to forward those scripts to server portion 14B for processing. In the following description, no distinction will be drawn between portions running on computer 16 and server 20, unless referred to specifically. It should be noted that EADIPECP may comprise one or more programs and program modules which can then be stored on a single or multiple storage media, whether volatile or non-volatile medium. Hence, when referring to "computer program stored on storage medium," we intend to include a computer program, regardless of whether it comprises one or more programs and program module, whether it is stored on a single or multiple volatile or non-volatile storage media.

As further can be seen from the above examples, target systems 24 incorporated into an embodiment of enterprise system 10 may require EADIPECP 14 to use multiple data communication protocols to be used to communicate with target systems 24. When referring to data communication protocols, we refer to requirements by each of target system 24 for communication with that target system. The systems can communicate with one another, either across layers of abstraction shown in FIG. IF or within those layers. Data communication protocols include: requirements of APIs of target systems 24; Java method invocation protocols; Jini protocols; CORBA protocols; COM object interfaces; ODBC/SQL database interface requirements; open directory protocols; Unix sockets; SNMP; internet data standards such as XML and HTML; serial data communication protocols such as RS-232; other network interface standards; or other future interface abstractions of interfaces whether they be at a high level or a low level. Protocols do not relate to the content of a message, but to the task of communicating the message from one device to another. Stallings in his book Data and Computer Communications, 2d ed. (1988), at 10, defines data communication protocol as follows:
A protocol is used for communication between entities in different systems. The terms "entity" and "system" are used in a very general sense. Examples of entities are user application programs, file transfer packages, data-base management systems, electronic mail facilities, and terminal. Examples of systems are computer, terminals, and remote sensors. Note that in some cases the entity and the system in which it resides are coextensive (e.g., terminals). In general, an entity is anything capable of sending or receiving information, and a system is a physically distinct object that contains one or more entities. For two entities to communicate successfully, they must "speak the same language." What is communicated, how it is communicated, and when it is communicated must conform to some mutually acceptable conventions between the entities involved. The conventions are referred to as a protocol, which may be defined as a set of rules governing the exchange of data between two entities The key elements of a protocol are: Syntax: includes such things as data format and signal levels; Semantics: includes control information for coordination and error handling; and Timing: includes speed matching and sequericing.

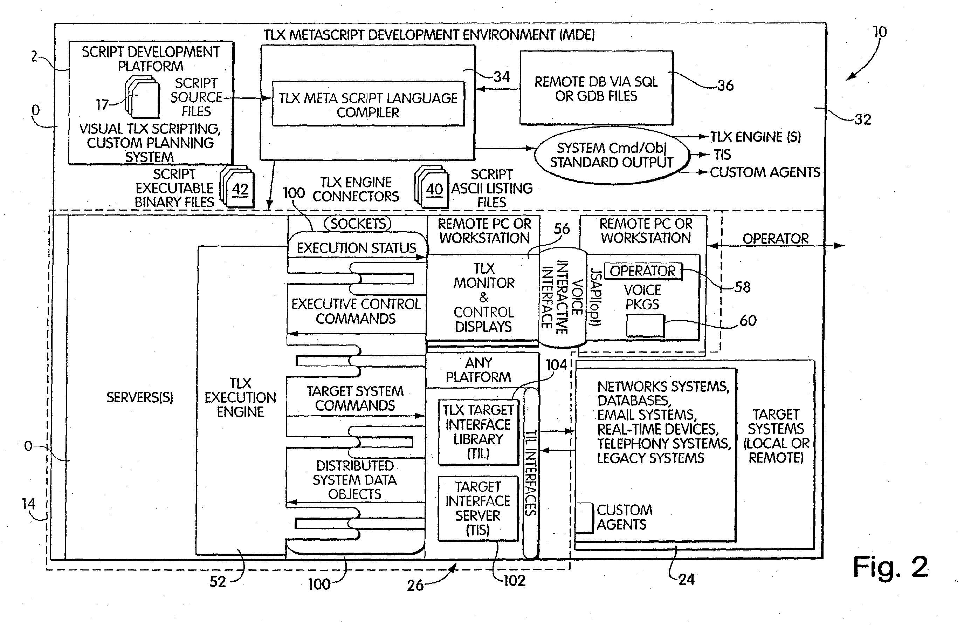

Referring to FIG. 2, the architecture and operation of EADIPECP 14 will now be described in more detail. EADIPECP 14 includes a metascript development environment 30 and an enterprise level integration and process execution engine. Metascript development environment 30 includes a script development platform 32, a compiler 34 and a database 36. Script development platform 32 is a computer program module which interacts with operator 12 to obtain enterprise level integration and process execution scripts 17 and supply scripts 17 to compiler 34. Scripts 17 are input and stored in the UI interface script language. The UI script language is a high-level, procedural language using natural language like statements. Hence, scripts 17 are not compiled into a lower level language or assembly language for execution. Instead, scripts 17 are interpreted and then executed at the high-level in which they are written. As is commonly the case with programs in script languages, scripts 17 act as high-level glue among various components controlled by EADIPECP 14. For further detail regarding script languages, see John K. Ousterhout, "Scripting: Higher Level Program for the 21 st Century", IEEE Computer (March 1998).

The UI script language is a highly flexible and configurable language which allows an operator to use high-level commands to operate multiple disparate and incompatible target systems 24. For example, target systems 24 may include several application programs, each of which may require a unique command for performing the same function. For example, target systems 24 may be databases, each of which has a different API and different command syntax for a write operation. The UI script language allows the operator to use a single command and command syntax to write into each and every one of the databases. For example, the operator may define a command WRITE for inserting a new record into the databases. The operator may define the command to have the following syntax: WRITE <DATA> IN <DATABASE NAME>. The operator can then use this single command to write into any of the databases. regardless of the particular commands any one of the databases requires.

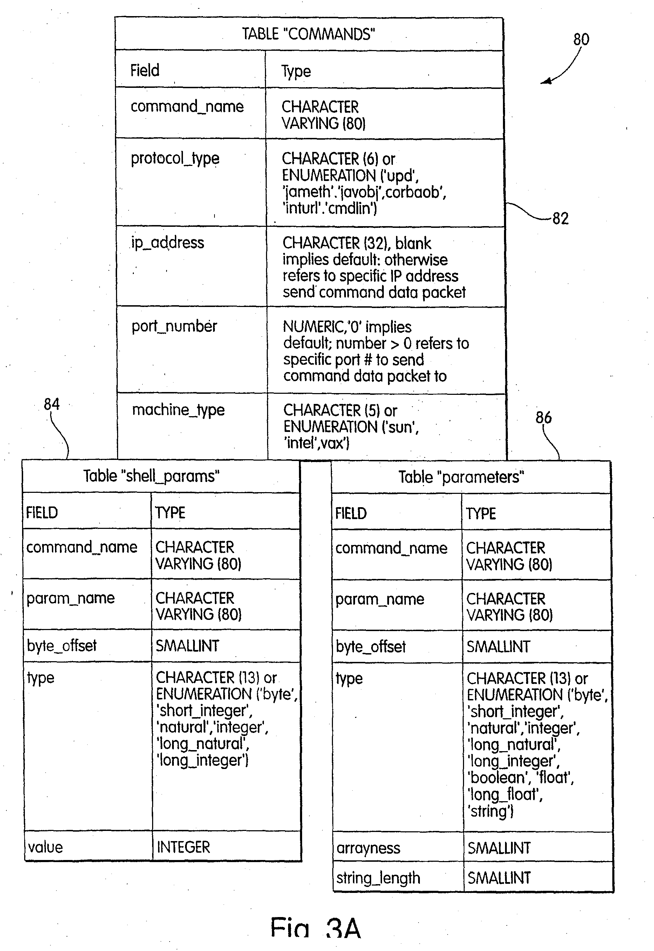

To implement this arrangement, each one of target systems 24 is abstracted to a set of commands, parameters, and input and output communication protocol requirements. Those commands, parameters, and requirements are then stored in database 36 in relation with the general command. Referring to Fig. 3A, database 36 includes a number of command tables which store relationships among elements which allow high-level script commands inputted by operator 12 to be mapped onto appropriate commands to be sent to target systems 24. A command table stores relationships between a high-level UI script language command and the commands of the target systems to which the high-level UI script language command relate. Each one of the commands of the target systems in turn is abstracted into a set of parameters which define the command. The set of parameters is then stored in a definition table 80 which includes three separate tables: a "commands" definition table 82, a "shell_params" definition table 84, and a "parameters" definition table 86. Commands definition table 82 specifies the command name used in the UI script language, the target system handler to be used for communicating with that target system, the address of the target interface layer responsible for communicating with that target system (expressed, for example, in conventional Internet Protocol and the port number for communicating with the target system), and the type of computer data format for the computer which controls the target system. The shell_params definition table 84 contains the parameters which define the command syntax and parameter definition for the command appropriate for the particular target system, including command name and type, and parameter name and type. The parameters definition table 86 contains the definitions for parameters which can be used in scripts 17. As will be described below, for any command in the script, compiler 34 accesses database 36, retrieves the appropriate definition table 80, and stored that definition table with the command line in the executable file provided to execution engine.

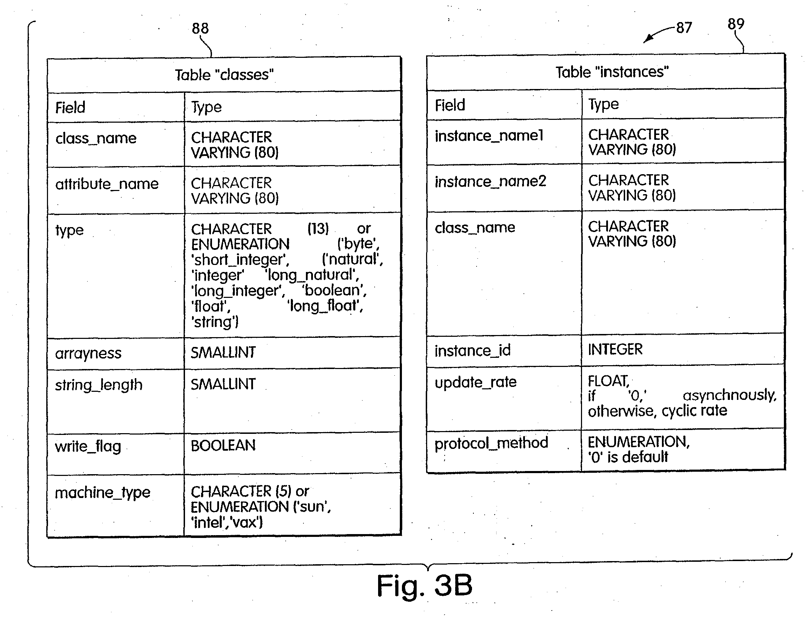

Referring to FIG. 3B, database 36 also stores data object tables 87 for data to be received from target systems 24. Data object table 87 includes a class definition table 88 which defines a particular data object the operator can use in scripts 17, for example, when requesting data from a target system. Data object table 87 also includes an instance definition table 89 which stores characteristics of the data to be received from a particular one of target systems 24. Generally, data may be received from a target system in one of two ways: in response to a command reading from the device or in a transmission initiated by the target system. Commands reading from the target system may be one time read commands or repetitive read commands characterized by a cyclic rate defined in the instance definition table 89. Instance definition table 89 also includes information regarding a particular target system handler to be used for communicating with the target system. In the case where the target system provides data independently and not in response to a command, the data is sent by the target system to the appropriate target system handler.

Referring to FIG. 4, a script program is made up of one or more program bundles. Each program bundle such as, program bundle 90, typically includes multiple sequences 92 which are executed in parallel with one another. Each one of sequences 92 can cause another sequence to be launched and to be executed in parallel with the launching sequence. Sequences 92 can also make calls to a sub-sequence 94 to require a sequential execution of a task. FIG. 4A shows an example of a graphic user interface used for inputting a script. FIG. 4B shows an example of a script. The scripts in FIGS. 4A and 4B apply to the intelligent audio/visual system shown in FIG. 1C. As can be seen, the displayed script is written in a high-level language and includes many easy to understand commands.

Program bundles 90 are controlled by one of three commands: an INSTALL command causes a bundle to be installed and executed; a REMOVE command causes a bundle to be removed from execution; and, a HALT command halts execution of a particular bundle. Sequences 92 are controlled by six different commands: a START command for starting execution of a sequences; a STOP COMMAND for stopping execution a sequence; a RESUME command for resuming execution of a sequence; a SINGLE STEP command for single stepping through execution of a sequence; a HOLD AT command for holding execution at a particular line of in the sequence; and, a JUMP TO command for causing execution of a sequence to jump to a different statement from the one being currently executed.

The UI script language also has two important features. First, the UI script language provides for interfacing with a person at the same level and in a similar manner as interfacing with one of target systems 24. Referring also to FIG. 1, target systems 24 are shown to include a human operator interacting with a computer. The UI script language allows interacting with that operator in the same manner as a target system: commands may be sent to that operator, the operator may be queried for data readings, the operator may be queried to make an observation, or any other variety of tasks. The UI script language provides a set of simple high-level commands to enable such a communication. Two of the commands require responses from the operator: a CONFIRM command requires either a "yes" or a "no" answer, and a QUERY command requires a more detailed answer. Three of the commands do not require responses from the operator: a MESSAGE command delivers a non-urgent message, a WARNING command delivers an urgent message, and a DISREGARD command informs the operator to ignore a previous QUERY or CONFIRM command. A PAUSE subcommand can optionally be added to any of these commands. The PAUSE subcommand halts the execution of a sequence until the operator sends a RESUME command, or a RESPOND command, if appropriate.

Second, EADIPECP 14 provides for the ability by one sequence to monitor the execution status of another sequence. To do so, an operator need only include a simple STATUS query command in a sequence. Based on the results from such a status query, operator 12 can then require the querying sequence to perform a series of tasks. Operator 12 may also select to execute any one of the six sequence commands described above with response the queried sequence depending on its status, for example, halting the sequence because of an error condition. Further features and capabilities of the UI script language will not be described in detail here. A description may be found in U.S. Provisional Application Serial No. 60/116,754, filed January 22, 1999, and from U.S. Provisional Application Serial No. 60/104,654, filed October 16,1998.

Referring back to FIG. 2, after inputting scripts 17, operator 12 can start the process of compiling the scripts. Compiler 34 compiles scripts 17 into ASCII script listing files 40 and binary executable script files 42. When compiling scripts 17, compiler 34 accesses database 36 as needed. Compiler 34 parses scripts 17 and verifies that scripts 17 have proper UI scripts language syntax. Compiler 34 then identifies the UI script language statements (e.g., WHEN/WHENEVER statements) and the customized commands (e.g., WRITE <NAME> TO CUSTOMER DATABASE).

As to the customized commands, compiler 34 accesses database 36 which stores the commands tables (FIG. 4). Compiler 34 stores with each command with a corresponding one of command definition tables 80. Compiler 34 also stores each data retrieval request with a corresponding one of data object definition tables 87.

After compiling scripts 17, compiler 34 sends ASCII script listing files 40 and script executable binary files 42 to an execution engine 52 which runs, for example, on server 20. Execution engine 52 executes script executable binary files 42 and sends the command data packets to target systems 24 through target interface layer 26. Execution engine 52 also provides commands to a monitor and control displays module 56 which, in turn, provides those inputs to various displays and output target systems preferably including a text-to-speech generator 58.

Execution engine 52 executes sequences in parallel by executing them in cyclical passes. During each pass, execution engine 52 executes a number of "non-blocking" statements, up to a selected limit, in the order that they appear in each one of the sequences. Non-blocking statements are those statements which do not cause execution engine 52 to move on to another sequence. After cycling through all sequences, execution engine 52 cycles through the next installed bundle, if any. After executing the last bundle, execution engine 52 sleeps until called upon by the operating system of server 20. The frequency of the passes can be selected by an operator, either as part of a script or determined through an operator query. In response, the operating system of server 20 causes execution engine 52 to begin each one of its passes - that is, "wakes up" engine 52 - in accordance with the frequency selected by the operator. Note that it is possible to have multiple execution engines operating at different frequencies.

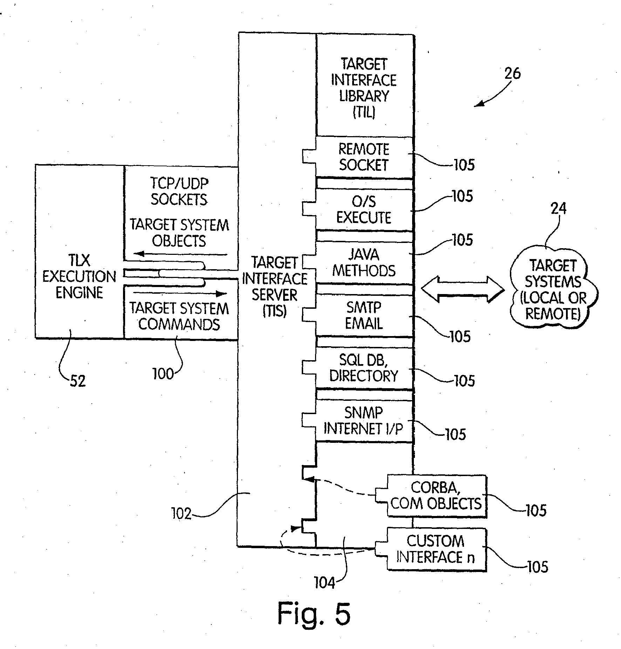

Referring also to FIG. 5, when execution engine 52 encounters a command, execution engine 52 replaces the command (e.g., WRITE <NAME> TO CUSTOMER COMPLAINT DATABASE) with a command data packet to be sent to target interface layer 26 responsible for communicating with the appropriate target system 24. The command data packet has at least two types of information. First, the packet includes the command to be sent to the particular target system, including the command name and any parameter values. Compiler 34 translates the user input variables (e.g., NAME) to values required by the target system and in the data format required by the target system. Second, the packet includes the address of the appropriate target interface layer 26 and an identifier with a particular handler associated with a target system handler module within that target interface layer 26 (FIG. 4). The identifier can be a unique identifier associated with the particular handler. The identifier may also be a protocol flag indicating a data communication protocol to be used by target interface layer 26 when communicating with the target system and thereby indirectly identifying the handler. The command data packet can also include an identifier identifying the target system. It can also have data and commands for the target system handler, such as the frequency of performing read operations to obtain data from the target system.

After forming the command data intended for one of target systems 24, execution engine 52 places the command data packet on a UDP/IP socket 100 for target interface layer 26 to retrieve. The UDP/IP socket may cause the command data packet be transferred over a network, such as the World Wide Web, to the location of target interface layer 26 identified by the IP address in the command data packet. Upon retrieving the command data packet from socket 100, a target interface server 102 of target interface layer 26 parses the command data packet. Based on the target system handler information (identified as "protocol type" in command definition table 82 in FIG. 3A), target interface server 102 accesses target interface library 104 to determine a particular target system handler 105 responsible for communicating with the addressed target system. Target interface library 104 stores target system handlers 105 written in, for example, the Java programming language from Sun Microsystems, for communicating with target systems 24. Each target system handler 105 is capable of communicating with a predetermined set of target systems 24 according to protocols required by those systems. Some target system handlers 105 are capable of communicating using only a single protocol and the protocol type can be used as a surrogate for identifying the handler to target interface server 102. Target interface server 102 invokes the appropriate module which runs in a virtual Java machine, connects to the target system and sends the command to the target system 24 to communicate the command.

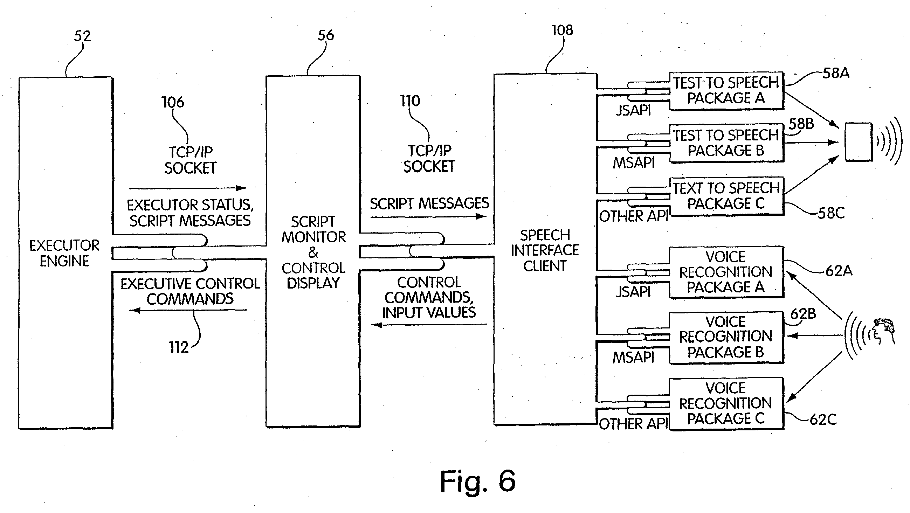

Referring also to FIG. 6, as indicated, the commands MESSAGE, WARNING, CONFIRM, QUERY, DISREGARD are used to communicate with human operators. These commands are compiled with an API handler identifier which indicates the API handler to be used for communicating with text-to-speech generator 58. The API handler flag, for example, may simply an indicator identifying an industry-standard API such as the Java Speech API (JSAPI) or the Microsoft Speech API (MSAPI), or a non-standard, package-specific Java or C language API, and thereby identify an appropriate handler indirectly.

During execution, execution engine 52 places a speech-related command data packet on a socket 106 for script monitor and control displays module 60 to retrieve. Module 60 then forwards the packet to a speech interface client module 108 via a (preferably TCP/IP) socket 110. Speech interface client 110 uses the API flag to retrieve an appropriate Java module for communicating with that API and an instance of that Java module is loaded into a Java virtual machine. The Java module then sends the message to text-to-speech generator 58 in the manner required by the API of text-to-speech generator 58.

As stated above, data from target systems 24 is either received in response to a command from execution engine 52 or sent from target systems 24 independently. As data is received from one of target systems 24, the target system handler running in interface layer 26 and communicating with the target system receives the data based on the protocol required by that target system. If the data is received in response to command, the data is reformatted in accordance to the data object information in the command data packet and then sent through socket 100 to execution engine 52. However, if the data is not sent in response to any command, the data is merely placed in a packet and sent via socket 100 to execution engine 52. Execution engine 52 then may initiate a particular sequence which is designed to handle such data. Data from speech recognition module 62 are processed in a similar fashion.

It should be noted that speech interface client 108 can be thought of a limited and special case of a target interface layer 26. Hence, target interface layer 26 can be used to implement the same functionality as speech interface client 108.

As is apparent, the above architecture in essence separates execution engine 52 from the task of handling communication with a multitude of disparate target systems. Instead, the above architecture encapsulates various communication protocol requirements in data structures included in the executable files. The content of these data structures are then included by execution engine 52 in command data packets without execution engine 52 acting upon them to initiate communication. In short, the data communication with systems 24 becomes transparent and relatively simple for execution engine 52 by requiring execution engine 52 to merely package the command data packets and send them in accordance with a uniform communication protocol, here, UDP/IP. This architecture allows separating the task of making rule-based decisions at a high level from the task of interfacing with target systems , 24 which implement the results of those rule-based decisions, thereby increasing the extensibility, flexibility, and robustness of enterprise system 10. In addition, this architecture allows placing target interface layer 26 and target system handlers 105 at the client computer, where the infrastructure for communicating with the multitude of target systems 24 is typically already in place, while the communication between execution engine 52 and the target systems handlers is limited to communication according to a robust network protocol (such as UDP/IP or TCP/IP) through a robust network (such as the Internet and WWW).

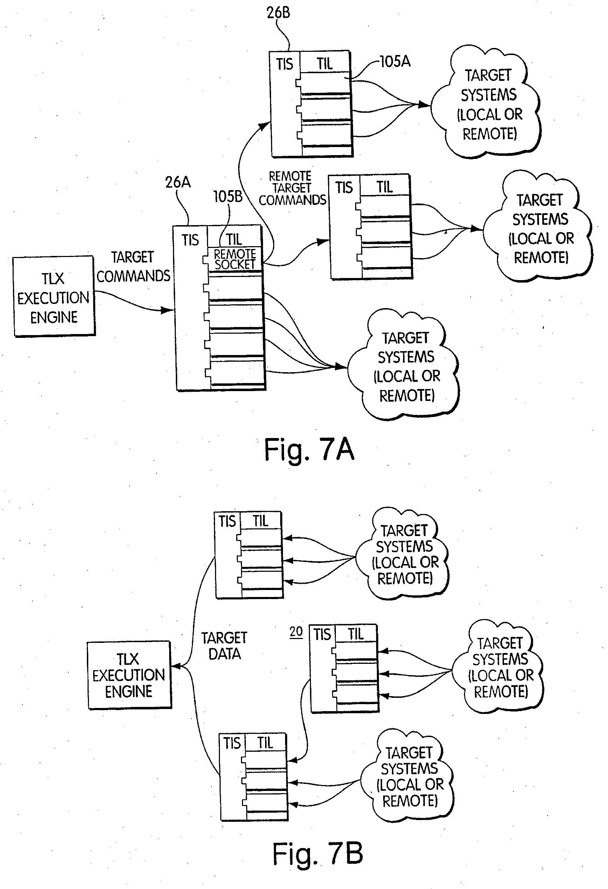

Referring to FIGs. 7A and 7B, execution engine 52 can communicate with one or more target interface layers 26. In addition, a command data packet to be forwarded through one target interface layer 26A to another target interface layer 26B which actually communicates with a particular target system 24. Hence, in FIG. 7A, target interface layer 26A can forward commands intended for target systems of another target interface layer 26B through a target interface client handler 105A. The database entry of a command to be forwarded through target interface layer 26A merely contains entries suggesting that the command data packet should be sent to a target system handler 105B of target interface layer 26A. Client system handler 105B is uniquely designed for forwarding packets to other target interface layers. Upon receiving the command data packet, target system handler processes the command data packet to determine based on the handipr's own information to which target interface layer the command data packet should be forwarded. This is particularly useful for certain types of applications where the destination of a command depends on factors unknown to the execution engine 52. For example, it may be that the command is to obtain a credit report for a customer from one of three credit reporting agencies. Client system handler 105B can have a high-level of intelligence which, for example, determines based on recent data, which one of the three has the fastest turn-around time, and preferentially send the command data packet to that particular credit reporting agency. As would be apparent to a person skilled in the art, other types of intelligent routing capabilities can easily be built into target system handler 105B and target interface layer 26A.

A target interface layer 26 can also interact with another execution engine to control, monitor, and affect the operation of that other engine. Hence, execution engine 52 can issue commands to be directed to starting, stopping, or in some other way affecting the operation of another engine. Such a command can then be sent out to the other execution engine via target interface layer 26 to socket 112 connected to the other execution engine. In addition, the other engine can send status data to execution engine 52 through its socket 106 to target interface layer 26 of execution engine 52.

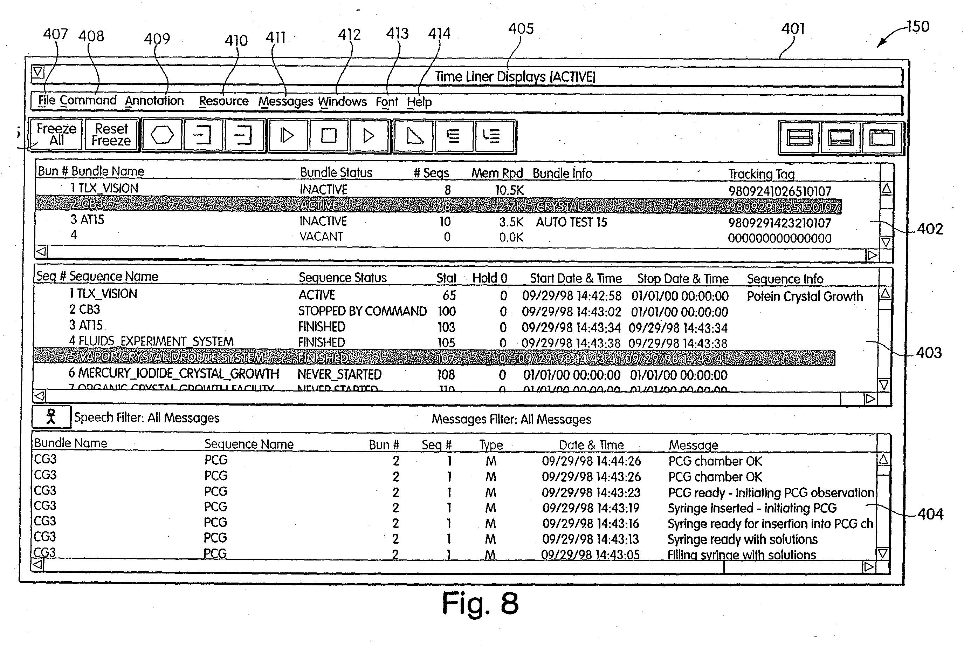

Referring to FIG. 8, execution engine 52 causes module 60 to display a graphical user interface 150 to allow a user view the exact status of a script being currently executed. Hence, the user can view at any point which one of a particular script's lines is being executed. This is implemented by taking advantage of the execution engine's feature of interpreting and executing high-level programs as opposed to executing an assembly language compilation of a high-level program. At the completion of each statement, the current sequence statement number and parameter values are stored in a number of sequence status value buffers. Since there is a one to one relationship between a line being executed by execution engine 52 and the script language program, a simple correlation is made between the stored data and the scripts language program. Hence, the operator not only sees the particular statement being currently executed, but also the value associated with various parameters and which conditional branches were executed or may be executed in the future.

As stated above, the UI script language allows a sequence to determine the status of another sequence. To implement this feature, execution engine 52 checks the data stored at the end of execution of each statement to determine the execution status of a sequence. Data reflecting the execution status is then sent to the querying sequence. Based on checking the results of the status check, the querying sequence can make a determination as to how the queried sequence should be executed. For example, the queried sequence may be halted, terminated, single-stepped, or resumed using the commands described above for controlling operations of sequences.

GUI 150 shows the status of various executing bundles and scripts. GUI 150 has five areas: the title bar, the menu bar, the tool bar, the notebook area, and the message data area. The title bar 405 indicates the current status of execution engine 52, i.e., ACTIVE or FROZEN. The Menu Bar at the top contains eight top level menus: File, Command, Annotation, Resources, Messages, Windows, Font, and Help. The File Menu contains the following options: Open Listing File, which loads a bundle listing file which is not associated with an installed bundle into the Procedure Page; Print File, which prints the listing file displayed in the Procedure Page; Default Settings, which resets user preferences such as viewing annotations and tracking execution (these items are discussed below); Edit Ids, which edits the controller and monitor Ids; and Quit, which exits program. The Command Menu allows the user to send the following commands to execution engine 52: Install, Freeze All, Reset Freeze, Halt Bundle, Remove Bundle, Start Sequence, Stop Sequence, Resume Sequence, Step, Hold At and Jump To. Commands are enabled if the status of the item receiving the command is valid for that command. For example, if a sequence is ACTIVE, Start Sequence and Resume Sequence is disabled. The Turn Override On option allows the user to bypass this safety feature when needed. The default for this option is OFF.

The Annotation Menu contains the following options: Annotations, which displays annotations in the Procedure page if turned on (default is ON); and Annotate Line, which opens the Annotation Editor (discussed below). The Resource Menu displays the amount of resources available, namely memory, bundle slots, and sequence slots. The Messages Menu 411 allows the user to filter the messages displayed in the message data area. This menu also contains controls for determining the number of auditory alert beeps issued when various messages are received. The Windows Menu allows the user to select the viewing mode. Available options are Summary page, Procedure page, and Lite (all discussed below). This menu is also used to control whether the Procedure page should track the execution of the script in real time. Default for this option is ON. The Font Menu 413 allows the user to choose the font size for information being displayed. The available options are Small (default), Medium, and Large. The Help Menu 414 allows the user to enable (default) and disable bubble help. The Tool Bar 415 contains command buttons for controlling the EADIPECP 14 Executor and navigation buttons for controlling the EADIPECP 14 Displays view. There are four groups of command buttons: executor commands (Freeze All and Reset Freeze), bundle commands (Halt Bundle, Install Bundle, and Remove Bundle), sequence commands (Start Sequence, Stop Sequence, and Resume Sequence), and statement commands (Hold At and Jump To). The three navigation buttons (Summary Page, Procedure Page, and Lite) are grouped together on the right hand side. The Notebook Area is used to display two different sets of data, depending upon the needs of the user at a given moment. One option is to view the bundle and sequence status data 402, 403 in the Summary Page, while another option is to display the listing of a particular bundle in the Procedure Page: The user can switch between the two pages using the Windows menu or the navigation buttons in the tool bar. Each of the pages will be described in more detail below.

The Message Data Area 404 consists of the message listing box, which displays the most recent messages issued by the Executor, and the message filter, which can be used to filter out certain messages (this function is also provided in the Messages Menu). The user can filter messages by the current bundle, the current sequence, the current monitor ID, or the current bundle and the current monitor ID. Each line contains Bundle Name, which is the name of the bundle that issued the message (blank if Executor level error message), Sequence Name, which is name of the sequence that issued the message (blank if Executor level or bundle level error message, or a bundle install acknowledgement message), Bun #, which is the slot number, Seq #, which is the sequence number, Type, which is the message type, Date & Time, which indicates when the message was received by the Displays, and Message, which is the text of the message. Each message is color-coded based on the type of the message, where A is the type indicator for a bundle install acknowledgement that appears in blue, C is for a confirm that appears in orange, E is for an error message that appears in red, M is for a script message that appears in blue, Q is for a query that appears in orange, and W is for a warning message that appears in gold. Display start up and shutdown are also indicated in gold.

The Summary Page 401 allows the user to observe the status of all of the bundles currently installed in the Executor (5). This bundle status data can be viewed in the listing display component at the top of the page. The data in this display component include slot number (where the bundle is installed), bundle name, bundle status, number of sequences defined in the bundle, bundle information, and bundle tracking tag. Halt and Remove commands can be used against the selected bundle in the listing display component. The sequence listing display component is located below the bundle listing display component. This display component contains sequence data for all of the sequences that are defined in the currently selected bundle. The data in this display component include sequence number, sequence name, sequence status, current statement number, hold at statement number, start time of the sequence, stop time of the sequence, and sequence information. Start, Stop, and Resume commands can be used against the selected sequence in the listing display component.

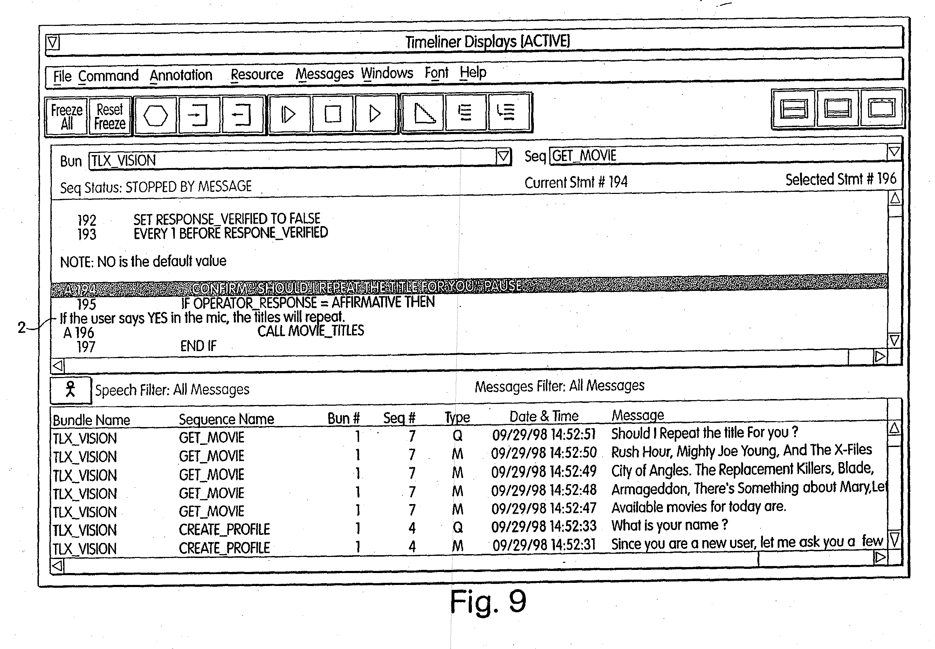

A Procedure Page GUI 451, shown in FIG. 9, allows a user to view a bundle listing file. If the listing file is for an installed bundle, the status of the current sequence and the last statement executed is displayed at the top of the page. The Bundle pull down menu is provided to allow a user to load another EADIPECP 14 listing file into the listing display component. Selecting an item in the Sequence pull down menu causes the listing display, component to be scrolled to the selected sequence. If the user has turned on Tracking, the most currently executed statement in the selected sequence is highlighted and the listing display component is scrolled so that this statement is positioned in the middle of the view. If the Tracking is off, the automatic scrolling function is disabled, allowing the user to scroll through the bundle listing file freely. If the user uses the mouse to click on a particular listing line, this line is displayed as the Selected Stmt #. This is the line number that is used if the user issues a Hold At or Jump To command or adds, edits, or deletes an annotation.

When Annotations (user comments associated with a EADIPECP 14 statement) is turned on, all the annotations associated with this bundle listing file are displayed in the listing display component along with the data from the listing file. Each annotation is displayed in distinguishing text 502, such as differently colored letters, directly above the statement being annotated. A user can annotate a script as the script executes. Since the script executes at a high level, as discussed before, the annotation corresponds to the script statements input by the operator.

To edit an annotation, the user must first select the annotations menu item in order to view the annotations for a selected bundle. This causes the annotations to be loaded into the listing display component along with the bundle listing file. After the annotation file data is displayed to the screen, the user may edit an annotation for a specific statement within the bundle listing file. This is accomplished by first selecting the desired statement with the mouse. The selected statement becomes highlighted and the statement number appears as the Selected Stmt # on the upper right hand corner. Selecting the Annotate Line menu item from the Annotation menu or double clicking on the line opens up the Annotation Editor, shown in Figure 21. Save, Delete, and Exit are available to the user in this editor. Pressing the Save button causes the annotation (.TLN) file to be saved locally. Pressing the Delete button causes the current annotation to be deleted. Pressing the exit button closes the editor. If the annotation has beeri modified, a warning window is displayed. This warning window gives the user an option to save the annotation changes or to exit the annotation editor without saving.

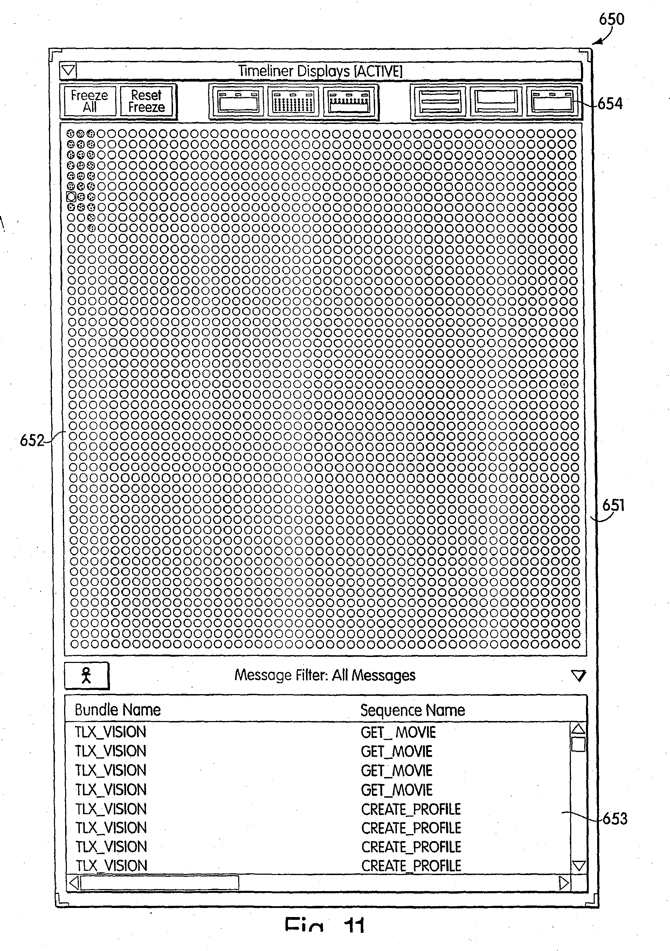

The Lite window 650, shown in Figure 11, allows the user to see a synopsis of the Executor status. The user can view a colored status box for each installed bundle and their sequences. The user can also view messages in the same fashion as on the Main Window and handle operator response requests by double clicking on the messages. The Tool Bar for the Lite Window (654) consists of three sets of command buttons. The first set allows the user to issue Freeze All and Reset Freeze commands. The middle set controls the viewing mode of the Lite Window, where the first mode is to view the messages only, the second mode is to view the status lights only, and the third mode is to view both the messages and the lights 652. The right-hand set of command buttons allow the user to return to the Main Window with either the Summary page or the Procedure page. Double clicking on any of the lights also switches to the Main Window with the Procedure page, with the text centered at the current statement for the selected sequence. Figure 19 shows the main Sequence Control display provided for the Operator.

Other embodiments of the invention are within the scope of the claims below.

For example, in some embodiments target interface server 102 can access a remote target interface database, for example, somewhere in the cyberspace and down load an appropriate Java module.

Each of target systems 24 may be identified by a virtual address which is then mapped to the physical address of the target system by target interface layer 26. The physical addresses may be located in a central or distributed database located locally or remotely from target interface layer 26.

Enterprise system 10 is a very flexible and capable tool for out-sourcing maintenance and monitoring of systems used in enterprises. A service provider can enter into a relationship to maintain and monitor an enterprise's systems. The service provider installs an enterprise-level integration and process execution system. The service provider installs the target interface layer at the enterprise and connects the enterprise's systems to the interface layer. The interface layer allows the enterprise-level integration and process execution portion of EADIPECP 14 to run at the service provider's site and interact with various systems at the enterprise. Scripts written by the service provider can then be used to monitor and maintain the enterprise's system. Data between the service provider and the interface layer at the client site can be sent via any channel, such as the Internet, for example, by using virtual private network (VPN) for security purposes.

The commands may include commands for launching one or more application programs at a client computer and for sending data to those application programs. For example, the commands may cause, for example, a web browser, a visual presentation application, or a word processor, to be launched. Other commands then may cause data to be sent to those packages to be displayed to a user.

Computer systems for implementing the systems of FIGs. 1, 1A-E, and 2 typically include a main unit connected to both an output device which displays information to a user and an input device which receives input from a user. The main unit generally includes a processor connected to a memory system via an interconnection mechanism. The input device and output device also are connected to the processor and memory system via the interconnection mechanism.

One or more output devices may be connected to the computer system. Example output devices include cathode ray tube (CRT) displays, liquid crystal displays (LCD). printers, communication devices such as modems, and audio outputs. One or more input devices may be connected to the computer system. Example input devices include a keyboard, keypad, track ball, mouse, pen and tablet, communication device, and data input devices such as sensors. It should be understood the invention is not limited to the particular input or output devices used in combination with the computer system or to those described herein.

The computer system may be a general purpose computer system which is programmable using a computer programming language, such as C++, Java, or other language, such as a scripting language or assembly language. The computer system may also include specially programmed, special purpose hardware. In a general purpose computer system, the processor is typically a commercially available processor, of which the series x86, Celeron, and Pentium processors, available from Intel, and similar devices from AMD and Cyrix, the 680X0 series microprocessors available from Motorola, the PowerPC microprocessor from IBM and the Alpha-series processors from Digital Equipment Corporation, are examples. Many other processors are available. Such a microprocessor executes a program called an operating system, of which Windows NT, Linux, UNIX, DOS, VMS and OS8 are examples, which controls the execution of other computer programs and provides scheduling, debugging, input/output control, accounting, compilation, storage assignment, data management and memory management, and communication control and related services. The processor and operating system define a computer platform for which application programs in high-level programming languages are written.

A memory system typically includes a computer readable and writeable nonvolatile recording medium, of which a magnetic disk, a flash memory and tape are examples. The disk may be removable, known as a floppy disk, or permanent, known as a hard drive. A disk has a number of tracks in which signals are stored, typically in binary form, i.e., a form interpreted as a sequence of one and zeros. Such signals may define an application program to be executed by the microprocessor, or information stored on the disk to be processed by an application program or the operating system. Typically, in operation, the processor causes data to be read from the nonvolatile recording medium into an integrated circuit memory element, which is typically a volatile, random access memory such as a dynamic random access memory (DRAM) or static memory (SRAM). The integrated circuit memory element allows for faster access to the information by the processor than does the disk. The processor generally manipulates the data within the integrated circuit memory and then copies the data to the disk when processing is completed. A variety of mechanisms are known for managing data movement between the disk and the integrated circuit memory element, and the invention is not limited thereto. It should also be understood that the invention is not limited to a particular memory system.

The database 36 may be any kind of database, including a relational database, object-oriented database, unstructured database or other database. Example relational databases include Oracle 8i from Oracle Corporation of Redwood City, California: Informix Dynamic Server from Informix Software, Inc. of Menlo Park, California; DB2 from International Business Machines of Yorktown Heights, New York; and Access from Microsoft Corporation of Redmond, Washington. An example object-oriented database is ObjectStore from Object Design of Burlington, Massachusetts. An example unstructured database is Notes from the Lotus Corporation, of Cambridge, Massachusetts. A database also may be constructed using a flat file system, for example by using files with character-delimited fields, such as in early versions of dBASE, now known as Visual dBASE from Inprise Corp. of Scotts Valley, California, formerly Borland International Corp.

Various computer,platforms, processors, or high-level programming languages can be used for implementation. Additionally, the computer system may be a multiprocessor computer system or may include multiple computers connected over a computer network. Each module (e.g., 34, 52, and 26) in FIG. 1 may be separate modules of a computer program, or may be separate computer programs. Such modules may be operable on separate computers. Data may be stored in a memory system or transmitted between computer systems. The invention is not limited to any particular implementation using software or hardware or firmware, or any combination thereof. The various elements of the system, either individually or in combination, may be implemented as a computer program product tangibly embodied in a machine-readable storage device for execution by a computer processor. Various steps of the process may be performed by a computer processor executing a program tangibly embodied on a computer-readable medium to perform functions by operating on input and generating output. Computer programming languages suitable for implementing such a system include procedural programming languages, object-oriented programming languages, and combinations of the two.

The description of the embodiments contained herein details some of the many ways the present invention can provide its intended purposes. While several embodiments are described, it is apparent that various changes might be made without departing from the scope of the invention.

## Claims

1. A computer implemented method for an enterprise control engine, comprising:
processing, at the enterprise control engine, a plurality of instructions which include at least one instruction for sending a message to an operator;
generating, at the enterprise control engine, a command based on the at least one instruction for sending a message to an operator;
sending the command to a speech interface module, the command including at least a command operator and an application program interface (API) flag identifying an API to be used for communicating with a text-to-speech converter;
sending, at the speech interface module, the command operator to the text-to-speech converter using the API identified by the API flag.

2. The method of claim 1 further comprising sending, at a speech recognizer, data to the speech interface module, processing the data at the speech interface module, and sending, at the speech interface module, the processed data to the enterprise control engine.

3. The method of claim 1 or 2, wherein the enterprise control engine runs on a server computer and the speech interface module runs on a client computer remote from the server computer, the server computer and the client computer being connected to a network.

4. A computer program stored in a computer readable medium, comprising an enterprise control engine and instructions for:
processing, at the enterprise control engine, a plurality of instructions which include at least one instruction for sending a message to an operator;
generating, at the enterprise control engine, a command based on the at least one instruction for sending a message to an operator;
sending the command to a speech interface module, the command including at least a command operator and an application program interface (API) flag identifying an API to be used for communicating with a text-to-speech converter;
sending, at the speech interface module, the command operator to the text-to-speech converter using the API identified by the API flag.
